Europäisches Patentamt

(19) European Patent Office

Office européen des brevets

· (11) Publication number: **0 143 115 B1**

(12) **EUROPEAN PATENT SPECIFICATION**

(45) Date of publication of patent specification: **09.05.90**

(21) Application number: **83111883.1**

(22) Date of filing: **28.11.83**

(51) Int. Cl.⁵: **B 60 K 5/12, F 16 F 13/00,**
**F 16 F 7/10, F 16 F 9/08**

(54) **Vibration-absorbing mount with hydraulic damping, e.g. for engines.**

(43) Date of publication of application:
**05.06.85 Bulletin 85/23**

(45) Publication of the grant of the patent:
**09.05.90 Bulletin 90/19**

(84) Designated Contracting States:
**DE FR GB**

(56) References cited:
EP-A-0 042 911     FR-A-2 504 227
DE-A-2 303 464     GB-A- 871 732
DE-A-2 616 258     US-A-3 658 314
DE-U-1 805 392     US-A-3 888 450
FR-A-2 349 066

PATENTS ABSTRACTS OF JAPAN, vol. 7, no.
261(M-257)(1406), 19th November 1983; & JP - A
- 58 142 045 (TOYO GOMU KOGYO K.K.)
23-08-1983

PATENTS ABSTRACTS OF JAPAN, vol. 7, no.
199(M-240)(1344), 3rd September 1983; & JP - A
- 58 97525 (NISSAN JIDOSHA K.K.) 10-06-1983

(73) Proprietor: **TOYO TIRE & RUBBER CO., LTD .**
**17-18, Edobori 1-chome**
**Nishi-ku Osaka-shi (JP)**
(73) Proprietor: **TOYOTA JIDOSHA KABUSHIKI**
**KAISHA**
**1, Toyota-cho Toyota-shi**
**Aichi-ken 471 (JP)**

(72) Inventor: **Okamoto, Shuichi**
**49-1-203, Kamihamacho 4-chome**
**Tsu-Shi Mie-Ken (JP)**
Inventor: **Kunihiro, Motoo**
**390, Yumiyashiki Iwata**
**Tsu-Shi Mie-Ken (JP)**
Inventor: **Nakajima, Yoshiharu**
**11-11, Kamizato 1-Chome**
**Okazaki-Shi Aichi-Ken (JP)**

(74) Representative: **Lehn, Werner, Dipl.-Ing. et al**
**Hoffmann, Eitle & Partner Patentanwälte**
**Arabellastrasse 4**
**D-8000 München 81 (DE)**

EP 0 143 115 B1

## Description

This invention relates to a vibration-absorbing mount which may be used for mounting an automobile engine upon a vehicle chassis and to engine-mounting arrangements including such a mount. JP—A—38 142 045 discloses a vibration absorbing mount comprising:

an upper member;

a lower member;

a resilient wall body interposed between the upper and lower member to form a sealed chamber; and

a capsule within said chamber and comprising an exterior substantially rigid case, a bag within said case and capable of changing its volume by expansion or contraction, and an orifice member extending from the interior of the bag to the exterior of the case, said bag thus defining a sacciform chamber in communication with said closed chamber by way of the orifice member, and said sacciform chamber and said closed chamber being filled with a damping fluid.

In bearing or supporting an engine mounted on an automobile in a vibration-absorbing manner, because of the fact that the rotational speed of the engine changes over a wide range, such a vibration-absorbing mount is required to be capable of fulfilling two requirements: that damping rate relative to large-amplitude, low frequency oscillations which are generated upon running at a low speed is large; and that vibration insulation capacity against high frequency oscillations occurring at high speed is large.

Vibration-absorbing mounts of this kind which use rubber or an air spring as a high damping member cannot retain effective vibration insulation performances over a wide range of oscillations since enhancing damping capacity against low frequency oscillations makes dynamic spring characteristics large and conversely, improving dynamic spring characteristics leads to the result that damping capacity against low frequency oscillations is not exhibited.

In order to alleviate such drawback or disadvantage as described above, extensive research and development has been conducted to find vibration-absorbing mounts capable of exhibiting substantial, good vibration-absorbing properties against both high and low frequency oscillations. All-round vibration-absorbing mounts of various shaps have heretofore been proposed. Among them, for instance, is known a vibration absorbing mount having fluid damping whose damping function against oscillations employs a sealed fluid and whose vibration insulation function employs a rubber layer.

The mount of JP—A—58 142 045 was able to improve damping capacity in the low frequency range without simultaneously adversely affecting the high frequency isolation properties. However, the low frequency damping could still usefully be improved and the dynamic spring constant in respect of high frequency oscillations is still too large.

JP—A—58-97525 discloses an air spring having a weight for decreasing the dynamic spring constant in the high frequency region. The document is not able however to suggest any way of improving low frequency damping characteristics.

An object of the invention is to provide a vibration-absorbing mount employing hydraulic damping which has improved low-frequency damping properties in addition to enhanced high frequency isolation characteristics and sound absorption.

According to the invention, there is provided a vibration-absorbing mount with hydraulic damping comprising:

an upper member;

a lower member;

a resilient wall body interposed between the upper and lower member to form a sealed chamber; and

a capsule within said chamber and comprising an exterior substantially rigid case, a bag within said case and capable of changing its volume by expansion or contraction, and an orifice member extending from the interior of the bag to the exterior of the case, said bag thus defining a sacciform chamber in communication with said closed chamber by way of the orifice member, and said sacciform chamber and said closed chamber being filled with a damping fluid, characterised by

a ring-shaped mass damper extending transversely and sealingly in the wall body intermediate the upper and lower members, and by choosing the weight the radius and the thickness of the mass damper so that the resonant frequency of the mass damper is adapted to the vibration in the compression directions as well as in the shear directions.

The preferred embodiment of the present invention provides an improved vibration-absorbing mount with hydraulic damping having a new construction which is capable of affording more effective insulation performances against the oscillations based on high speed rotation of an engine and the abnormal noises generated upon starting and acceleration or deceleration of an engine.

It will be apparent that the preferred embodiment of the invention provides a vibration-absorbing mount with hydraulic damping, in which the capsule including the orifice member for passage of fluid therethrough exhibits damping performance against low frequency oscillations and is encased sealingly within a fluid-filled chamber having a large mechanical strength whereby the mount device is made compact and robust. By the provision of the mass damper, good vibration insulation characteristics can be exhibited in respect of dull sound in the median frequency region and penetrating sound in the high frequency region.

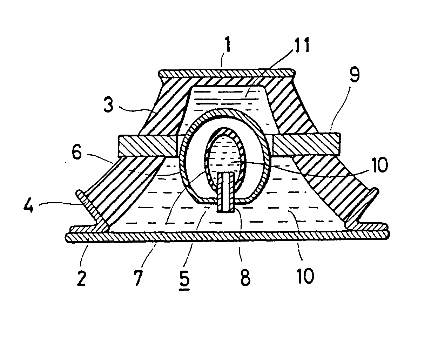

The invention will be hereinafter described in greater detail by way of example with reference to the accompanying drawing, the single figure of which is a schematic elevational view in cross-section showing one example of the vibration-absorbing mount according to this invention.

The vibration-absorbing mount shown in the Figure comprises, as main constituent members, an upper member 1 of metal for securement to an automobile engine body, a lower member 2 of metal for securing to an automobile vehicle chassis, a generally tubular rubber wall body 3, a housing member 4, a capsule 5 and a mass damper 9.

The term "tubular" of the rubber wall body 3 shall be used herein in its broad sense. Accordingly, the rubber wall body 3 assumes a generally tubular shape, e.g. a cylindrical shape, a frusto-conical shape or an inverted bowl-like shape as in the drawing, a barrel-like shape or the like. Its top portion is secured to the upper member 1 and its bottom circumferential periphery is secured to the housing member 4 of annular shape.

The mass damper 9 is formed in a ring shape and is transversely provided in the longitudinally median portion of the rubber cylindrical wall body 3 so as to be sealingly secured therewith.

It is required that the connections between the upper member 1 and the rubber wall body 3, beween the housing member 4 and the rubber wall body 3, between the mass damper 9 and the rubber wall body 3 be completely fluid-tight and that they have sufficient durability to mechanical external forces. To that end, adhesive bonding by vulcanization is a suitable treatment means.

The housing member 4 serves to reinforce the rubber cylindrical wall body 3 and also functions as a supporting foundation for the rubber cylindrical wall body 3 by adhesion to the lower fitment 2.

The lower fitment 2 and the housing member 4 are fluid-tightly and firmly secured to one another in this way, so that there is defined a fluid-tight, closed space enclosed by both the members 1, 2, the rubber wall body 3, the mass damper 9, the capsule 5 and the housing member 4. The closed space constituting a closed chamber 11 is filled with a damping fluid 10 such as water.

The capsule 5 constitutes a double-chamber construction in which a sealed bag 7 made of an elastomer such as rubber capable of changing volume by expansion and contraction is encased in a fluid-tight rigid case 6 formed of a sheet material having a stiffness such as rigid plastics or metal and an orifice member 8 such as narrow tube is sealingly provided entering the rigid case 6 and the bag 7 whereby the sacciform chamber of the bag 7 is put in communication with the closed chamber 11 outside the rigid case 6 by way of the orifice member 8.

The hollow space of the capsule 5 existing between the rigid case 6 and the sealed bag 7 holds an appropriate volume accommodated to the volume of the closed chamber filled with fluid 10 and is sealed with atmospheric air or plenum air (at a higher pressure than the atmospheric pressure) therein.

The capsule 5 floats in the fluid 10 of the closed chamber 11 or is captively held by a portion (not shown) of the rubber cylindrical wall body 3.

The vibration-absorbing mount thus constructed is surrounded, at its external part, by the upper and lower members of metal 1, 2, the housing member 4 and the mass damper 9 both as a robust member, and the tough tubular wall body constructed of a heavy-gauge rubber layer, so that it has a large mechanical strength.

When supporting an engine on the mount device, the pressure exerted on the closed chamber 11 and the pressure within the sealed air space of the capsule 5 are balanced, and as a consequence, the bag 7 retains its initial definite shape.

When an engine is actuated and oscillated, the rubber wall body 3 is subject to a dynamic compressive flexure and exhibits dynamic spring characteristics, thereby functioning as a vibration absorber. Concurrent with the flexure of the rubber wall body 3, the fluid-filled chamber 11 changes its volume, responsive to which the fluid 10 is admitted to or released from the sacciform chamber of the bag 7 via the orifice member 8. Therefore, a high damping capacity against oscillations is obtained depending on throttling effect of the fluid passing through the orifice member 8.

The mass damper 9 transversely provided in the median portion of the rubber cylindrical wall body 3 functions, on the one hand, as a damper relative to the transmission of the vibrations in compression directions to the rubber cylindrical wall body 3. On the other hand, it functions to keep the spring rate of the vibration-absorbing mount per se large relative to the vibrations in shear directions.

It is possible to adapt the resonance frequency of the mass damper 9 to the vibrations in the compression directions for example 350 Hz and to adapt that to the vibrations in the shear directions for example 150 Hz by choosing appropriately weight, radius and thickness of the mass damper. By this construction, the mass damper can exhibit the function of absorption of engine sound on the order of 300 to 600 Hz, thus contributing greatly to quiet driving comfort.

Should there occur breakage of the bag 7 during the use of the vibration-absorbing mount, then all that occurs is that the sealed air between the sealed bag 7 and the rigid case 6 shifts into the rubber cylindrical wall body 3 and there is no disadvantage of the fluid 10 leaking out of the mount device. If such a situation appears, the decrease in damping capacity to vibrations is not avoidable, but it can retain its capacity for supporting heavy loads.

Advantages and effects peculiar to an attainable by this invention are summarized below:

(a) The rubber tubular wall body 3 exhibits, when subjected to dynamic compressive flexure, dynamic spring characteristics effective for vibration-absorption and the throttling action of the fluid passing through the orifice member 8 causes a high damping capacity to vibrations to be exhibited. Furthermore, the mass damper 9 has an insulation effect on dull sound in the median frequency region of 100—150 Hz and on penetrating sound in the high frequency region of 300—500 Hz. Thus, excellent vibration-absorbing function is sufficiently exhibited by the combination of these three members.

(b) The portion of mount device that has damping function against oscillations, especially low frequency oscillations is constructed of a capsule which is immersed sealingly in the fluid within the robust, strong assembly comprising the upper and lower members 1, 2, the rubber cylindrical wall body 3 and the mass damper 9, so that the mount device thus obtained has resistance to external forces and a long life durability.

(c) As compared with a prior art vibration-absorbing mount of the type in which a fluid is passed through two upper and lower partitioned chambers by way of a throttle, the mount of this invention attains the same effect together with lessening the dimension of height. Accordingly, the structure of mount can be made compact.

(d) Should the bag 7 of the capsule 5 be broken during use, there is no leakage of fluid 10 at all. As a consequence, high loading capacity can be retained and hence, a higher reliability is obtained as compared with prior art mount device whose frequency of exchange by a new device is high because of liability to cause leakage of fluid.

Thus, the vibration-absorbing mount with fluid damping according to this invention is very useful for mounting engines thereon.

**Claims**

1. A vibration-absorbing mount with hydraulic damping comprising:
    an upper member (1);
    a lower member (2);
    a resilient wall body (3) interposed between the upper and lower member to form a sealed chamber (11); and
    a capsule (5) within said chamber (11) and comprising an exterior substantially rigid case (6), a bag (7) within said case (6) and capable of changing its volume by expansion or contraction, and an orifice member (8) extending from the interior of the bag (7) to the exterior of the case (6), said bag thus defining a sacciform chamber in communication with said closed chamber by way of the orifice member (8), and said sacciform chamber and said closed chamber being filled with a damping fluid (10), characterised by
    a ring-shaped mass damper (9) extending transversely and sealingly in the wall body (3) intermediate the upper and lower members and by choosing the weight, the radius and the thickness of the mass damper so that the resonance frequency of the mass damper is adapted to the vibrations in the compression directions as well as in the shear directions.

2. A mount according to Claim 1 characterised in that said mass damper (9) penetrates into said sealed chamber (11).

3. A mount according to Claim 1 or 2 characterised in that said mass damper (9) divides said wall body (3) into upper and lower portions.

4. A mount according to Claim 3 characterised in that said mass damper (9) is bonded to said upper and lower portions of said wall body (3).

5. A mount according to Claim 4 characterised in that said mass damper (9) is vulcanized to said upper and lower portions of said wall body (3).

6. A mount as claimed in any one of the preceding claims characterised by a housing member (4) for supporting the wall body (3) which member is sealingly bonded to the lower member (2) and to the wall body (3).

7. A mount as claimed in any one of the preceding claims characterised in that the hollow space of said capsule defined between the rigid case and the sealed bag is sealed and contains air at atmospheric or plenum pressure.

8. A mount as claimed in Claim 7 characterised in that the pressure within the hollow space of the capsule outside the sacciform chamber and the pressure imposed on the closed chamber under load are balanced.

9. A mount as claimed in any one of Claims 1 to 8 characterised in that said capsule (5) is arranged to float in the fluid of said closed chamber or is captively held to the mass damper.

10. A mount as claimed in any one of Claims 1 to 9, characterised in that said wall body has a frusto-conical or cylindrical shape.

11. A mount according to any one of the preceding claims characterised in that said wall body is elastomeric.

12. A mount according to Claim 11 characterised in that said wall body is of rubber.

13. A mount according to any one of the preceding claims for use in supporting an engine.

14. A mount according to Claim 1, characterised by choosing the dimensions of the mass damper so that the resonance frequency is adapted to 350 Hz in the compression direction and to 150 Hz in the shear direction.

15. An engine mounting arrangement characterised by a mount according to Claim 13.

**Patentansprüche**

1. Schwingungsdämpfendes Lager mit hydraulischer Dämpfung, umfassend:
    ein oberes Teil (1);
    ein unteres Teil (2);
    einen elastischen Wandkörper (3), welcher zwischen dem oberen und unteren Teil zur Ausbildung einer abgedichteten Kammer (11) angeordnet ist; und
    eine innerhalb der Kammer (11) angeordnete Kapsel (5), die ein äußeres, im wesentlichen starres Gehäuse (6), einen innerhalb des Gehäuses (6) befindlichen Bund durch Ausdehnen oder Zusammenziehen volumenveränderbaren Beutel (7) und ein mit einer Öffnung versehenes Teil (8) umfaßt, welches vom Inneren des Beutels (7) zur Außenseite des Gehäuses (6) verläuft, wobei der Beutel so eine sackförmige Kammer bildet, die über das die öffnungbildende Teil mit der geschlossenen Kammer in Verbindung steht, wobei die sackförmige Kammer und die geschlossene Kammer mit einem Dämpfungsfluid (10) gefüllt ist, gekennzeichnet durch einen ringförmigen Massendämpfer (9), der zwischen dem oberen und unteren Teil quer und abgedichtet im Wandkörper (3) verläuft, und

durch Auswahl des Gewichtes, des Radius und der Dicke des Massendämpfers derart, daß die Resonanzfrequenz des Massendämpfers an die Schwingungen sowohl in die Kompressionsrichtungen als auch in die Scherrichtungen angepaßt ist.

2. Lager nach Anspruch 1, dadurch gekennzeichnet, daß der Massendämpfer (9) in die abgedichtete Kammer (1) ragt.

3. Lager nach Anspruch 1 oder 2, dadurch gekennzeichnet, daß der Massendämpfer (9) den Wandkörper (3) in einen oberen und unteren Abschnitt aufteilt.

4. Lager nach Anspruch 3, dadurch gekennzeichnet, daß der Massendämpfer (9) an den oberen und unteren Abschnitt des Wandkörpers (3) geklebt ist.

5. Lager nach Anspruch 4, dadurch gekennzeichnet, daß der Massendämpfer (9) an den oberen und unteren Abschnitt des Wandkörpers (3) vulkanisiert ist.

6. Lager nach einem der vorhergehenden Ansprüche, gekennzeichnet, durch ein Gehäuseteil (4) zum Abstützen des Wandkörpers (3), welches Gehäuseteilabgedichtet mit dem unteren Teil (2) und dem Wandkörper (3) verklebt ist.

7. Lager nach einem der vorhergehenden Ansprüche, dadurch gekennzeichnet, daß der Hohlraum der Kapsel, der zwischen dem starren Gehäuse und dem abgedichteten Beutel ausgebildet ist, abgedichtet ist und Luft unter atmosphärischem Druck oder Überdruck enthält.

8. Lager nach Anspruch 7, dadurch gekennzeichnet, daß der Druck innerhalb des Hohlraumes der Kapsel außerhalb der sackförmigen Kammer und der auf die geschlossene Kammer unter Last aufgebrachte Druck ausbalanciert sind.

9. Lager nach einem der Ansprüche 1 bis 8, dadurch gekennzeichnet, daß die Kapsel (5) so angeordnet ist, daß sie im Fluid der geschlossenen Kammer schwimmt oder unlösbar am Massendämpfer gehalten ist.

10. Lager nach einem der Ansprüche 1 bis 9, dadurch gekennzeichnet, daß der Wandkörper kegelstumpfförmig oder zylindrisch ist.

11. Lager nach einem der vorhergehenden Ansprüche, dadurch gekennzeichnet, daß der Wandkörper ein Elastomer ist.

12. Lager nach Anspruch 11, dadurch gekennzeichnet, daß der Wandkörper aus Kautschuk besteht.

13. Lager nach einem der vorhergehenden Ansprüche, verwendet zur Abstützung eines Motors.

14. Lager nach Anspruch 1, gekennzeichnet, durch das Auswählen der Dimensionen des Massendämpfers so, daß die Resonanzfrequenz in der Kompressionsrichtung an 350 Hz und in der Scherrichtung an 150 Hz angepaßt ist.

15. Motorlageranordnung, gekennzeichnet, durch ein Lager gemäß Anspruch 13.

**Revendications**

1. Dispositif de montage absorbant les vibrations avec un amortissement hydraulique, comportant:

un élément supérieur (1);

un élément inférieur (2);

un corps (3) de paroi élastique interposé entre l'élément supérieur et l'élément inférieur de façon à former une chambre scellée (11); et

une capsule (5) à l'intérieur de ladite chambre (11) et comportant un boîtier (6) extérieur substantiellement rigide, un sac (7) à l'intérieur dudit boîtier (6) et susceptible de changer de volume par dilatation ou contraction, et un élément (8) d'orifice s'étendant depuis l'intérieur du sac (7) jusqu'à l'extérieur du boîtier (6), ledit sac définissant en conséquent une chambre sacciforme en communication avec ladite chambre close au moyen de l'élément (8) d'orifice, et ladite chambre sacciforme et ladite chambre close étant remplies par un fluide d'amortissement (10), caractérisé par:

un amortisseur de masse (9) en forme d'anneau s'étendant transversalement et de façon étanche dans le corps (3) de paroi, entre les éléments supérieur et inférieure et le poids, le rayon et l'épaisseur de l'amortisseur de masse, étant choisis de telle sorte que la fréquence de résonance de l'amortisseur de masse soit adaptée aux vibrations dans les directions de compression et dans les directions de cisaillement.

2. Dispositif de montage selon la revendication 1, caractérisé en ce que ledit amortisseur de masse (9) pénètre dans ladite chambre scellée (11).

3. Dispositif de montage selon la revendication 1 ou la revendication 2, caractérisé en ce que ledit amortisseur de masse (9) divise ledit corps (3) de paroi en parties supérieure et inférieure.

4. Dispositif de montage selon la revendication 3, caractérisé en ce que ledit amortisseur de masse (9) est fixé auxdites parois supérieure et inférieure dudit corps (3) de paroi.

5. Dispositif de montage selon la revendication 4, caractérisé en ce que ledit amortisseur de masse (9) est vulcanisé auxdites parois supérieure et inférieure dudit corps (3) de paroi.

6. Dispositif de montage selon l'une quelconque des revendications précédentes, caractérisé par un élément (4) de boîtier pour supporter le corps (3) de paroi, lequel élément est fixé de façon étanche à l'élément inférieur (2) et au corps (3) de paroi.

7. Dispositif de montage selon l'une quelconque des revendications précédentes, caractérisé en ce que l'espace creux de ladite capsule défini entre le boîtier rigide et le sac scellé est scellé et contient de l'air à la pression atmosphérique ou sous pression.

8. Dispositif de montage selon la revendication 7, caractérisé en ce que la pression à l'intérieur de l'espace creux de la capsule en dehors de la chambre sacciforme et la pression imposée à la chambre close subissant une charge sont équilibrées.

9. Dispositif de montage selon l'une quelconque des revendications 1 à 8, caractérisé en ce que ladite capsule (5) est disposée de façon à flotter dans le fluide de ladite chamber close ou est maintenu de façon captive par l'amortisseur de masse.

10. Dispositif de montage selon l'une quelconque des revendications 1 à 9, caractérisé en ce que ledit corps de paroi a une forme tronconique ou cylindrique.

11. Dispositif selon l'une quelconque des revendications précédentes, caractérisé en ce que ledit corps de paroi est en élastomère.

12. Dispositif de montage selon la revendication 11, caractérisé en ce que ledit corps de paroi est en caoutchouc.

13. Dispositif de montage selon l'une quelconque des revendications précédentes, pour l'utilisation au support d'un moteur.

14. Dispositif de montage selon la revendication 1, caractérisé par le choix des dimensions de l'amortisseur de masse de façon à ce que la fréquence de résonance soit adaptée à 350 Hz dans la direction de compression et à 150 Hz dans la direction de cisaillement.

15. Disposition de montage de moteur caractérisée par un dispositif de montage selon la revendication 13.